# EUROPÄISCHE PATENTANMELDUNG

(11) **EP 3 569 624 A1**
(43) Veröffentlichungstag der Anmeldung: **20.11.2019**
(21) Anmeldenummer: 19171324.7
(22) Anmeldetag: 26.04.2019
(51) Int. Cl.: C08G 18/09, C08G 18/18, C08G 18/79

(54) **VERFAHREN ZUR HERSTELLUNG VON ISOCYANURATGRUPPEN AUFWEISENDEN POLYISOCYANATEN UND IHRE VERWENDUNG**

(30) Priorität: 17.05.2018 EP 18172805
(71) Anmelder: BASF SE, 67056 Ludwigshafen am Rhein (DE)
(72) Erfinder: LUCAS, Frederic, 67056 Ludwigshafen (DE); HOECKER, Johannes David, 67056 Ludwigshafen (DE)
(74) Vertreter: BASF IP Association

(57) **Zusammenfassung**

Die vorliegende Erfindung betrifft neue Katalysatoren zur Herstellung von Isocyanuratgruppen aufweisenden Polyisocyanaten durch eine partielle Trimerisierung von (cyclo)aliphatischen Diisocyanaten.

## Beschreibung

Die vorliegende Erfindung betrifft ein neues Verfahren zur Herstellung von Isocyanuratgruppen aufweisenden Polyisocyanaten durch eine partielle Trimerisierung von (cyclo)aliphatischen Diisocyanaten in Gegenwart mindestens eines Trimerisierungskatalysators, welcher mindestens ein Salz bestehend aus einem tetrasubstituierten Ammonium- oder Phosphoniumkation und einem Tetraalkylboratanion umfasst, und die Verwendung der so erhältlichen Isocyanuratgruppen aufweisenden Polyisocyanate als Polyisocyanatkomponente in Polyurethanlacken.

Verfahren zur partiellen oder vollständigen Trimerisierung von organischen Polyisocyanaten zur Herstellung von Isocyanuratgruppen aufweisenden Polyisocyanaten oder zelligen oder kompakten Isocyanuratgruppen aufweisenden Polyurethanen sind bekannt und werden in zahlreichen Literaturveröffentlichungen beschrieben.

Aus EP 17196273.1 sind Trimerisierungskatalysatoren aus einem tetrasubstituirten Amonium- oder Phosphoniumkation und einem Phosphinatanion bekannt.

Aus DE-OS 29 16 201 (= US 4,454,317) sind Trimerisierungskatalysatoren aus einem quaternären, gegebenenfalls substituierten 2-Hydroxyethylammoniumkation und Säuren als Anion bekannt.

US 3,862,150 beschreibt Salze aus tertiären Aminen und α-substituierten Carbonsäuren als thermisch zersetzbare Katalysatoren, beispielsweise zur Urethanbildung, in denen als α-Substituenten Nitril-, Sulfonyl-, Sulfuryl-, Carbonyl-, Nitro- Acetyl- und Benzoylgruppen möglich sind. Durch die sich herausbildenden 1,3-Dicarbonylsysteme bzw. carbonylanalogen Systeme findet eine Decarboxylierung vereinfacht statt, so daß derartige Katalysatoren leicht desaktivieren, was den Temperaturbereich für deren Einsetzbarkeit nachteilig einschränkt.

US 3 635 848 beschreibt die Verwendung einer Koordinationsverbindung eines organischen Borsäureesters und eines Alkali- oder Erdalkalimetalls als Trimerisierungskatalysator für organische Polyisocyanate.

US 3 697 485 beschreibt die Verwendung eines Katalysatorsystems aus einem organischen Borsäureesters und einem Alkoholat- oder Phenolatsalz eines Alkalimetals als Trimerisierungskatalysator für organische Polyisocyanate.

Alkalimetallsalze von Carbonsäuren sind als Katalysatoren für die Trimerisierung von Isocyanaten bekannt.

Nachteilig ist jedoch die Anwesenheit von Wasser, bedingt durch die Herstellung aus der freien Säure und einem Alkalimetallhydroxid, im Isocyanat, da es mit den NCO-Gruppen zu Carbaminsäuregruppen reagieren kann, die nach Decarboxylierung Amine bilden, die wiederum zur Bildung von unerwünschten, weil meist unlöslichen, Harnstoffen führt.

Die Aufgabe der vorliegenden Erfindung bestand darin, einen Katalysator zur Herstellung von im wesentlichen farblosen, Isocyanuratgruppen enthaltenden Polyisocyanaten nach einem möglichst einfachen Verfahren in sehr guter Qualität und unabhängig von deren Herstellung reproduzierbar bereitzustellen, der über einen breiten Temperaturbereich anwendbar ist und der eine einheitliche Struktur aufweist.

Diese Aufgabe wurde gelöst durch ein Verfahren zur Herstellung von Isocyanuratgruppen-enthaltenden Polyisocyanaten durch zumindest teilweise Trimerisierung von (cyclo)aliphatischen Diisocyanaten in dem man die Umsetzung in Gegenwart mindestens eines Trimerisierungskatalysators, welcher mindestens ein Salz bestehend aus einem tetrasubstituierten Ammonium- oder Phosphoniumkation und einem Tetraalkylboratanion umfasst, durchführt.

Bevorzugte Ammonium- oder Phosphoniumkationen sind substituiert mit vier Kohlenwasserstoffresten.

Kohlenwasserstoffreste sind dabei Substituenten, die ausschließlich aus Kohlenstoff- und Wasserstoffatomen bestehen.

Die Alkylgruppen im Tetraalkylboratanion können funktionelle Gruppen, bevorzugt -OH, -SH, Cl und/oder -NH2 Gruppen, aufweisen. Weiterhin können die im Alkylgruppen im Tetraalkylboratanion geradkettig, zyklisch oder verzweigt sein. Bevorzugt bestehen die Alkylgruppen im Tetraalkylboratanion ausschließlich aus Kohlenstoff- und Wasserstoffatomen.

Ein weiterer bevorzugter Gegenstand der Erfindung ist ein Verfahren zur Herstellung von Isocyanuratgruppen aufweisenden Polyisocyanaten durch zumindest partielle Trimerisierung von aliphatischen oder/und cycloaliphatischen Diisocyanaten in Gegenwart mindestens eines Trimerisierungskatalysators und anschließend gegebenenfalls Desaktivierung des Trimerisierungskatalysators nach Erreichen des angestrebten Trimerisierungsgrads, in dem man als Trimerisierungskatalysator mindestens eine Verbindung der Formel (I) einsetzt, 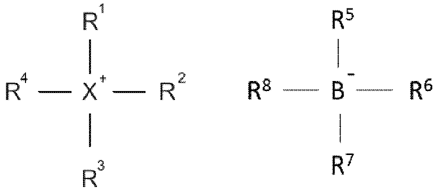 worin
X Stickstoff oder Phosphor ist,
R¹, R², R³ und R⁴ unabhängig voneinander jeweils gleich oder verschieden sein können und für eine geradkettige oder verzweigte, gegebenenfalls substituierte C₁- bis C₂₀-Alkylgruppe, eine gegebenenfalls substituierte C₅- bis C₁₂-Cycloalkylgruppe, eine gegebenenfalls substituierte C₇- bis C₁₀-Aralkylgruppe, oder eine gegebenenfalls substituierte C₆-C₁₂-Arylgruppe stehen oder
zwei oder mehr der Reste R¹ bis R⁴ gemeinsam miteinander eine 4-, 5- oder 6-gliedrige Alkylenkette bilden oder zusammen mit einem Stickstoffatom oder einem Phosphoratom einen 5- oder 6-gliedrigen Ring bilden, der noch ein zusätzliches Stickstoff-oder Sauerstoffatom als Brückenglied enthalten kann oder gemeinsam ein mehrgliedriges, vorzugsweise sechsgliedriges Mehrringsystem, vorzugsweise Zweiringsystem bilden, das noch ein oder mehrere zusätzliche Stickstoffatome, Sauerstoffatome oder Stickstoff- und Sauerstoffatome als Brückenglieder enthalten kann und
R⁵, R⁶, R⁷ und R⁸ unabhängig voneinander jeweils gleich oder verschieden sein können und für eine geradkettige oder verzweigte, gegebenenfalls substituierte C₁- bis C₂₀-Alkylgruppe oder eine gegebenenfalls substituierte C₅- bis C₁₂-Cycloalkylgruppe
stehen können.

Darin bedeuten
eine geradkettige oder verzweigte, gegebenenfalls substituierte C₁- bis C₂₀-Alkylgruppe beispielsweise Methyl, Ethyl, Propyl, Isopropyl, n-Butyl, iso-Butyl, sec-Butyl, tert.-Butyl, Pentyl, Hexyl, Heptyl, Octyl, 2-Etylhexyl, 2,4,4-Trimethylpentyl, Decyl, 1,1-Dimethylpropyl, 1,1-Dimethylbutyl oder 1,1,3,3-Tetramethylbutyl,
eine gegebenenfalls substituierte C₅- bis C₁₂-Cycloalkylgruppe beispielsweise Cyclopentyl, Cyclohexyl, Cyclooctyl, Cyclododecyl, Methylcyclopentyl, Dimethylcyclopentyl, Methylcyclohexyl, Dimethylcyclohexyl, Diethylcyclohexyl, Butylcyclohexyl, Methoxycyclohexyl, Dimethoxycyclohexyl, Diethoxycyclohexyl, Butylthiocyclohexyl, Chlorcyclohexyl, Dichlorcyclohexyl, Dichlorcyclopentyl sowie ein gesättigtes oder ungesättigtes bicyclisches System wie z.B. Norbornyl oder Norbornenyl,
eine gegebenenfalls substituierte C₇- bis C₁₀-Aralkylgruppe beispielsweise Benzyl, 1-Phenylethyl, 2-Phenylethyl, α,α-Dimethylbenzyl, Benzhydryl, p-Tolylmethyl,1-(p-Butylphenyl)-ethyl, o-, m- oder p-Chlorbenzyl, 2,4-Dichlorbenzyl, o-, m- oder p-Methoxybenzyl oder o-, m- oder p-Ethoxybenzyl, und
eine gegebenenfalls substituierte C₆-C₁₂-Arylgruppe beispielsweise Phenyl, 2-, 3- oder 4-Methylphenyl, α-Naphthyl oder β-Naphthyl.

Besonders bevorzugt bestehen die Reste R⁵ bis R⁸ jeweils ausschließlich aus Kohlenstoff- und Wasserstoffatomen.

Beispiele für R¹ bis R⁴ sind jeweils unabhängig voneinander Methyl, Ethyl, n-Propyl, Isopropyl, n-Butyl, sec-Butyl, tert.-Butyl, Pentyl, Hexyl, Heptyl, Octyl, 2-Etylhexyl, Phenyl, α- oder β-Naphthyl, Benzyl, Cyclopentyl oder Cyclohexyl.

Bilden zwei oder mehr der Reste R¹ bis R⁴ einen Ring, so können diese beispielsweise 1,4-Butylen, 1,5-Pentylen, 3-Oxa-1,5-pentylen, 3-Aza-1,5-pentylen oder 3-Methyl-3-aza-1,5-pentylen sein.

Bevorzugt für die Reste R¹ bis R⁴ sind unabhängig voneinander Methyl, Ethyl, Propyl, Isopropyl, n-Butyl, tert.-Butyl, Phenyl und Benzyl, besonders bevorzugt sind Methyl, Ethyl, n-Butyl, Phenyl und Benzyl, ganz besonders bevorzugt sind Methyl, Ethyl und n-Butyl und insbesondere n-Butyl.

Beispiele für R⁵,R⁶, R⁷ und R⁸ sind unabhängig voneinander Methyl, Ethyl,
n-Propyl, n-Butyl, tert.-Butyl, Pentyl, Hexyl, Heptyl, Octyl, 2-Etylhexyl, Cyclopentyl, Cyclohexyl, oder 2,4,4-Trimethylpentyl sein. Bevorzugt sind Methyl, Ethyl, n-Propyl, n-Butyl, ,tert.-Butyl, Cyclohexyl, und 2,4,4-Trimethylpentyl, besonders bevorzugt sind Methyl, Ethyl, n-Butyl, tert.-Butyl, Cyclohexyl und 2,4,4-Trimethylpentyl, ganz besonders bevorzugt sind Methyl, Ethyl, 2,4,4-Trimethylpentyl und n-Butyl und insbesondere n-Butyl und Ethyl.

Beispiele für Ammonium- oder Phosphoniumkationen sind Tetraoctylammonium, Tetramethylammonium, Tetraethylammonium, Tetra-n-butylammonium, Trimethylbenzylammonium, Triethylbenzylammonium, Tri-n-butylbenzylammonium, Trimethylethylammonium, Tri-n-butylethylammonium, Triethylmethylammonium, Tri-n-butylmethylammonium, Di-iso-Propyl-diethylammonium, Di-iso-Propyl-ethyl-methylammonium, Di-iso-Propyl-ethyl-benzylammonium, N,N-Dimethylpiperidinium, N,N-Dimethylmorpholinium, N,N-Dimethylpiperazinium, N-Methyl-diazabicyclo[2,2,2]octan, Tetraoctylphosphonium, Tetramethylphosphonium, Tetraethylphosphonium, Tetra-n-butylphosphonium, Trimethylbenzylphosphonium, Triethylbenzylphosphonium, Tri-n-butylbenzylphosphonium, Tributyl(tetradecyl)phosphonium, Trimethylethylphosphonium, Tri-n-butylethylphosphonium, Tributyl(octyl)phosphonium, Triethylmethylphosphonium, Tri-n-butylmethylphosphonium, Trihexyl(tetradecyl)phosphonium, Di-iso-Propyl-diethylphosphonium, Di-iso-Propyl-ethyl-methylphosphonium, Di-iso-Propyl-ethyl-benzylphosphonium oder Triisobutyl(methyl)phosphonium. Bevorzugte Alkylammoniumionen sind Tetraoctylammonium, Tetramethylammonium, Tetraethylammonium und Tetra-n-butylammonium, besonders bevorzugt sind Tetra-n-butyl-ammonium und Tetraethylammonium und ganz besonders bevorzugt ist Tetra-n-butylammonium.
Bevorzugte Phosphoniumionen sind Trihexyl(tetradecyl)phosphonium, Triisobutyl(methyl)phosphonium, Tributyl(tetradecyl)phosphonium, Tri-n-butylethylphosphonium, Tributyl(octyl)phosphonium, Tetra-n-butylphosphonium, besonders bevorzugt ist Tetra-n-butylphosphonium.

Ringsysteme enthaltende Ammoniumionen sind beispielsweise methylierte, ethylierte oder benzylierte Piperazine, Piperidine, Morpholine, Chinuclidine oder Triethylendiamine.

Beispiele für das Tetraalkylboratanion sind beispielsweise Tetramethylborat, Tetraethylborat, Tetraisopropylborat, Tetraisobutylborat und Tetra-n-butylborat. Bevorzugte Tetraalkylboratanionen sind Tetraethylborat und Tetra-n-butylborat.

Dabei spielt es bei chiralen Verbindungen erfindungsgemäß keine Rolle, welches Enantiomer oder Diastereomer eingesetzt wird, oder ob die Säuren racemisch eingesetzt werden.

Tetraalkylboratanionen im Sinne dieser Schrift weisen die Struktureinheit BR₄⁻ auf, wobei die vier Reste R Alkylreste sind, welche gleich oder verschieden sein können. Das Boratom weist somit vier kovalente Bindungen zu Kohlenstoffatomen auf. Diese Struktureinheit kann ein- oder mehrmals innerhalb eines Moleküls vorliegen, beispielsweise ein- bis sechsmal, bevorzugt einbis viermal, ganz besonders bevorzugt ein- bis dreimal, insbesondere ein- bis zweimal und speziell einmal.

Die erfindungsgemäßen Trimerisierungskatalysatoren sind in der Regel auch bei Temperaturen über 100 °C thermisch beständig und somit über einen Temperaturbereich von ungefähr 30 bis 160 °C katalytisch wirksam, wohingegen Säure-Base-Salze von tertiären Aminen bereits bei Temperaturen um 130 °C (s. US 3,862,150, Bsp. 2) zersetzt werden, wobei die Zersetzungsreaktion bereits bei wesentlich niedrigeren Temperaturen einsetzt, und quartäre Hydroxyalkylammoniumcarboxylate aufgrund ihrer thermischen Labilität in der Regel nur bei Temperaturen von 60 bis 80 °C verwendbar sind.

Höhere Trimerisierungstemperaturen, beispielsweise über 95 °C, werden jedoch häufig zur Trimerisierung von sterisch gehinderten Diisocyanaten, wie z.B. Isophorondiisocyanat oder 2-Butyl-2-ethyl-pentandiisocyanat-1,5, und insbesondere zur Herstellung höherer Oligomere angewandt, da dadurch höhere Raum-Zeit-Ausbeuten erreicht werden können. Die Reaktionsgeschwindigkeit der Trimerisierungsreaktion kann bei Verwendung der erfindungsgemäßen Trimerisierungskatalysatoren im Vergleich zu handelsüblichen Trimerisierungskatalysatoren, wie vorzugsweise N-(2-Hydroxypropyl)-N,N,N-Trimethylammonium-2-ethylhexanoat (DABCO TMR® der Firma Evonik mindestens beibehalten oder sogar erhöht werden. Zudem werden auch Isocyanuratgruppen aufweisende Polyisocyanate mit äußerst niedrigen Farbzahlen nach Hazen (DIN ISO 6271), z.B. vorzugsweise kleiner als 40 (bei HDI), bzw. unter 200, bevorzugt unter 100 (bei IPDI) erhalten.

Wie bereits dargelegt wurde, können die erfindungsgemäß verwendbaren Trimerisierungskatalysatoren nach bekannten Verfahren hergestellt werden.

Die Herstellung der erfindungsgemäßen Trimerisierungskatalysatoren umfassend ein Salz bestehend aus einem Ammonium- oder Phosphoniumkation und einem Tetraalkylboratanion kann beispielsweise analog den Arbeitsvorschriften erfolgen, wie in J. Org. Chem. Vol. 38, No. 22, 1973, Seiten 3916 bis 3918 und/oder JACS, 91:21, October 8, 1969, Seiten 5797 bis 5800.

Der erfindungsgemäße Katalysator kann in Substanz, als Lösung oder als Suspension eingesetzt werden.

Wird der Katalysator als Lösung eingesetzt, so wird, je nach Löslichkeit im verwendeten Lösungsmittel in der Regel eine 10 - 80 %ige, bevorzugt 10 - 60 %ig, besonders bevorzugt 15 - 60 %ig und ganz besonders bevorzugt 45 - 55 eine Gew%ige Lösung eingestellt.

Als Trimerisierungskatalysatoren können auch Gemische mit anderen bekannten Trimerisierungskatalysatoren eingesetzt werden, wobei diese in breiten Mengenverhältnissen, z.B. in Mengenverhältnissen von 90 : 10 bis 10 : 90, bevorzugt 80:20 bis 20:80 und besonders bevorzugt 60 : 40 bis 40 : 60 gemischt werden können.

Zur Herstellung der Isocyanuratgruppen aufweisenden Polyisocyanate werden die erfindungsgemäßen Trimerisierungskatalysatoren in Abhängigkeit von ihrer katalytischen Wirksamkeit zweckmäßigerweise in möglichst kleinen wirksamen Mengen, die experimentell auf einfache Weise ermittelt werden können, verwendet.

Im allgemeinen gelangen beim erfindungsgemäßen Verfahren die Verbindungen der Formel (I) in einer Menge von 0,002 bis 1,5 Gew.-%, vorzugsweise von 0,005 bis 1,2 Gew.-% bezogen auf das Gewicht der (cyclo)aliphatischen Diisocyanate, zum Einsatz.

Das erfindungsgemäße Verfahren wird zweckmäßigerweise bei einer Temperatur im Bereich von 10 bis 150°C und Reaktionszeiten von 10 min - 6 Stunden, bevorzugt von 20 min bis 6 Stunden, besonders bevorzugt von 20 min bis 3 Stunden durchgeführt. Bei Temperaturen über 150 °C kann eine Verfärbung der Isocyanuratgruppen aufweisenden Polyisocyanate auftreten, z.B. bei längeren Reaktionszeiten.

Bei Verwendung der erfindungsgemäßen Trimerisierungskatalysatoren werden vorzugsweise Reaktionstemperaturen über 50 °C, besonders bevorzugt von 55 bis 120 °C angewandt und im wesentlichen farblose Trimerisierungsprodukte erhalten.

Die Trimerisierung kann kontinuierlich, halbkontinuierlich oder diskontinuierlich durchgeführt werden, bevorzugt diskontinuierlich.

In der Regel spielt es nur eine untergeordnete Rolle welche Komponenten vorgelegt oder zugegeben werden. Zumeist wird das zu trimerisierende Isocyanat zumindest teilweise, bevorzugt vollständig, vorgelegt und der mindestens eine Katalysator langsam und/oder portionsweise zugegeben, dann auf die gewünschte Reaktionstemperatur gebracht und der verbleibende Teil des Katalysators, gegebenenfalls portionsweise, zugegeben.

Eine alternative Herstellungsvariante verläuft wie folgt: Beim diskontinuierlichen Verfahren wird in einem Rührreaktor gearbeitet. Dabei wird die Mischung aus Diisocyanat und Katalysator üblicherweise bei ca. 40°C vorgelegt. Im Anschluss wird die Temperatur der Reaktionsmischung zur Initiierung der Trimerisierung auf 50 bis 140 °C, bevorzugt auf 55 bis 100 °C, erhöht. Alternativ kann der Katalysator auch zudosiert werden, nachdem das Diisocyanat die zur Reaktion notwendige Temperatur erreicht hat. Die Trimerisierung ist in der Regel exotherm, der Katalysator kann in reiner Form eingesetzt werden. Es ist auch möglich, den Katalysator in einem geeigneten Lösungsmittel zu lösen und in dieser Form zum Einsatz zu bringen.

Die kontinuierliche Trimerisierung wird zweckmäßigerweise in einer Reaktionsschlange unter kontinuierlicher, gleichzeitiger Zudosierung von Diisocyanat und des Katalysators bei 50 bis 160 °C und innerhalb von 30 Sekunden bis 4 Stunden durchgeführt. Eine Reaktionsschlange mit kleinem Durchmesser führt zur Erreichung hoher Stömungsgeschwindigkeiten und folglich guter Durchmischung. Weiterhin ist es vorteilhaft, das Diisocyanat / Katalysator-Gemisch vor Eintritt in die Reaktionsschlange auf ca. 50 bis 60°C zu erhitzen. Zur exakteren Dosierung und optimalen Durchmischung des Katalysators ist es weiterhin vorteilhaft, den Katalysator in einem geeigneten Lösungsmittel zu lösen. Geeignet sind prinzipiell solche Lösungsmittel, in denen der Katalysator eine gute Löslichkeit hat. Die kontinuierlich Trimerisierung kann auch in einer Kesselkaskade durchgeführt werden. Denkbar ist auch eine Kombination aus Kesselkaskade und Rohrreaktor.

Üblicherweise wird die Reaktion in einem unter den Reaktionsbedingungen inerten Gas oder Gasgemisch durchgeführt, beispielsweise solche mit einem Sauerstoffgehalt unter 2, bevorzugt unter 1, besonders bevorzugt unter 0,5 Vol%, bevorzugt sind Stickstoff, Argon, Helium, Stickstoff - Edelgas - Gemische, besonders bevorzugt ist Stickstoff.

Nach Erreichen des gewünschten Trimerisierungsgrads bzw. NCO-Gehalts oder Umsetzungsgrades (bezogen auf den NCO-Gehalt vor der Reaktion) der Isocyanurat/(cyclo)aliphatische Diisocyanat-Reaktionsmischung, wobei der Umsatzgrad zweckmäßigerweise im Bereich von 10 bis 65 % der NCO-Gruppen, vorzugsweise von 10 bis 35 % der NCO-Gruppen, liegt und wozu üblicherweise Reaktionszeiten von 0,05 bis 6 Stunden, vorzugsweise von 10 min bis 3 Stunden, erforderlich sind, kann die Trimerisierungsreaktion beispielsweise durch eine Desaktivierung des Trimerisierungskatalysators beendet werden.

Das Produkt enthält neben monomerem Isocyanat Verbindungen, die einen oder auch mehrere Isocyanuratstrukturen aufweisen. Verbindungen dieser Art sind in der Literatur beschrieben.

Als Desaktivierungsmittel eignen sich beispielsweise anorganische Säuren, wie z.B. Chlorwasserstoff, phosphorige Säure oder Phosphorsäure, Carbonsäurehalogenide, wie z.B. Acetylchlorid oder Benzoylchlorid, Sulfonsäuren oder -ester, wie z.B. Methansulfonsäure, p-Toluolsulfonsäure, p-Toluolsulfonsäuremethyl- oder -ethylester,
m-Chlorperbenzoesäure und vorzugsweise Dialkylphosphate wie z.B. Di-2-ethylhexylphosphat und insbesondere Dibutylphosphat sowie Di-2-ethylhexylphosphat.

Die Desaktivierungsmittel können, bezogen auf die Trimerisierungskatalysatoren, in äquivalenten oder überschüssigen Mengen verwendet werden, wobei die kleinste wirksame Menge, die experimentell ermittelt werden kann, schon aus wirtschaftlichen Gründen bevorzugt wird. Beispielsweise wird das Desaktivierungsmittel im Verhältnis zum Trimerisierungskatalysator von 1 - 2,5 : 1 mol/mol, bevorzugt 1 - 2 : 1, besonders bevorzugt 1 - 1,5 : 1 und ganz besonders bevorzugt 1 - 1,2 : 1 mol/mol eingesetzt.

Die Zugabe ist abhängig von der Art des Desaktivierungsmittels. So wird Chlorwasserstoff bevorzugt gasförmig über oder bevorzugt durch das Reaktionsgemisch hindurch geleitet, flüssige Desaktivierungsmittel werden zumeist in Substanz oder als Lösung in einem unter den Reaktionsbedingungen inerten Lösungsmittel und feste Desaktivierungsmittel in Substanz oder als Lösung oder Suspension in einem unter den Reaktionsbedingungen inerten Lösungsmittel zugegeben.

Die Zugabe des Desaktivierungsmittels erfolgt in der Regel bei der Reaktionstemperatur, kann aber auch bei niedrigerer Temperatur erfolgen.

Das erfindungsgemäße Verfahren wird vorzugsweise lösungsmittelfrei durchgeführt. Werden die (cyclo)aliphatischen Diisocyanate jedoch in Gegenwart von Lösungs- oder Verdünnungsmitteln partiell trimerisiert, so eignen sich hierfür sowohl inerte unpolare als auch inerte polare Lösungs- oder Verdünnungsmittel, wie z.B. Toluol, Xylol, cyclische Ether, Carbonsäureester und Ketone oder ihre Gemische.

Die nach dem erfindungsgemäßen Verfahren hergestellten Isocyanuratgruppen aufweisende Polyisocyanate können in an sich bekannter Weise, beispielsweise durch Dünnschichtdestillation bei einer Temperatur von 100 bis 180 °C, gegebenenfalls im Vakuum, gegebenenfalls zusätzlich mit Durchleiten von inertem Strippgas, oder Extraktion von gegebenenfalls vorhandenen Lösungs- oder Verdünnungsmittel und/oder vorzugsweise von überschüssigen, nichtumgesetzten (cyclo)aliphatischen Diisocyanaten befreit werden, so daß die Isocyanuratgruppen aufweisenden Polyisocyanate mit einem Gehalt an monomeren Diisocyanaten von z.B. unter 1,0 Gew.-%, vorzugsweise unter 0,5 Gew.-%, besonders bevorzugt unter 0,3 Gew.-%, ganz besonders bevorzugt unter 0,2 Gew.-% und insbesondere nicht mehr als 0,1 Gew-% erhältlich sind.

Vorteilhaft ist, dass die im erfindungsgemäßen Verfahren eingesetzten Trimerisierungskatalysatoren eine gute Löslichkeit im Reaktionsgemsich aufweisen.

Ohne Abtrennung der überschüssigen monomeren Diisocyanate eignen sich die Isocyanuratgruppen aufweisende Polyisocyanate beispielsweise zur Herstellung von PU-Schaumstoffen, zelligen oder kompakten Elastomeren, Vergußmassen und Klebstoffen. Die monomerfreien und monomerhaltigen Isocyanuratgruppen aufweisenden Polyisocyanaten können ferner in an sich bekannter Weise durch Einführung von z.B. Urethan-, Allophanat-, Harnstoff-, Biuret- und/oder Carbodiimidgruppen modifiziert und/oder die Isocyanatgruppen mit geeigneten Blockierungsmitteln, wie z.B. ε-Caprolactam, Malonsäuredimethylester, Acetessigester oder aromatischen Hydroxylgruppen blockiert werden.

Nach dem erfindungsgemäßen Verfahren können beliebige, organische Diisocyanate mit aliphatischen, cycloaliphatischen oder aliphatischen und cycloaliphatischen Isocyanatgruppen oder ihre Gemische trimerisiert werden.

Geeignete aliphatische Diisocyanate besitzen vorteilhafterweise 3 bis 16 C-Atome, vorzugsweise 4 bis 12 C-Atome im linearen oder verzweigtkettigen Alkylenrest und geeignete cycloaliphatische Diisocyanate vorteilhafterweise 4 bis 18 C-Atome, vorzugsweise 6 bis 15 C-Atome im Cycloalkylenrest. Beispielhaft genannt seien:
1,4-Diisocyanato-butan, 2-Ethyl-1,4-diisocyanato-butan, 1,5-Diisocyanato-pentan, 2-Methyl-1,5-diisocyanato-pentan, 2,2-Dimethyl-1,5-diisocyanato-pentan, 2-Propyl-2-ethyl-1,5-diisocyanato-pentan, 2-Butyl-2-ethyl-1,5-diisocyanato-pentan, 2-Alkoxymethylen-1,5-diisocyanato-pentan, 3-Methyl-, 3-Ethyl-1,5-diisocyanato-pentan, 1,6-Hexamethylen-diisocyanat, 2,4,4- bzw. 2,2,4-Trimethyl-1,6-hexamethylen-diisocyanat, 1,7-Diisocyanatoheptan, 1,8-Diisocyanato-octan, 1,10-Diisocyanato-decan, 1,12-Diiso-cyanato-dodecan, 4,4'-Diisocyanato-dicyclohexylmethan, 2,4'-Diisocyanato-dicyclohexylmethan sowie Gemische der Diisocyanato-dicyclohexylmethan-Isomeren, 1,3-Diisocyanato-cyclohexan sowie Isomerengemische von Diisocyanato-cyclohexanen und 1-Isocyanato-3-isocyanatomethyl-3,5,5-trimethylcyclohexan. Als (cyclo)aliphatische Diisocyanate vorzugsweise verwendet werden 1,6-Hexamethylen-diisocyanat, isomere aliphatische Diisocyanate mit 6 Kohlenstoffatomen im Alkylenrest sowie Mischungen davon, 2-Butyl-2-ethyl-1,5-diisocyanato-pentan und 1-Isocyanato-3-isocyanatomethyl-3,5,5-trimethylcyclohexan, besonders bevorzugt sind 1,6-Hexamethylen-diisocyanat und 1-Isocyanato-3-isocyanatomethyl-3,5,5-trimethylcyclohexan sowie Mischungen davon, beispielsweise im Verhältnis 10:90 - 90:10, bevorzugt 20:80 - 80:20 und besonders bevorzugt 33:67 - 67:33, insbesondere bevorzugt ist 1,6-Hexamethylendiisocyanat. -

Selbstverständlich katalysieren die erfindungsgemäßen Katalysatoren auch die Trimerisierung aromatischer Isocyanate, sind jedoch für (cyclo)aliphatische Isocyanate bevorzugt.

Die erfindungsgemäßen neuen Trimerisierungskatalysatoren können zur Trimerisierung von nach beliebigen Verfahren, beispielsweise gemäß einem phosgenfreien oder einem unter Verwendung von Phosgen ablaufenden Verfahrensweg, hergestellten (cyclo)aliphatischen Diisocyanaten verwendet werden.

Die erfindungsgemäß verwendbaren (cyclo)aliphatischen Diisocyanate können nach beliebigen Verfahren, beispielsweise durch Phosgenierung der entsprechenden Diamine und thermische Spaltung der intermediär gebildeten Dicarbaminsäurechloride hergestellt werden. Nach phosgenfreien Verfahren hergestellte (cyclo)aliphatische Diisocyanate enthalten als Nebenprodukte keine Chlorverbindungen und besitzen daher herstellungsbedingt ein grundsätzlich anderes Nebenproduktspektrum.

Selbstverständlich können auch Gemische von Isocyanaten, die nach dem Phosgenverfahren und nach phosgenfreien Verfahren hergestellt sind, eingesetzt werden.

Es zeigte sich, dass die erfindungsgemäß verwendbaren Trimerisierungskatalysatoren bei der Trimerisierung auch von nach dem Phosgenverfahren hergestellten (cyclo)aliphatischen Diisocyanaten eine gute katalytische Wirksamkeit aufweisen und Isocyanuratgruppen aufweisende Polyisocyanate mit niedriger Farbzahl ergeben.

Die in das erfindungsgemäße Verfahren einsetzbaren nach einem phosgenfreien Verfahren und insbesondere durch thermische Spaltung von (cyclo)aliphatischen Dicarbaminsäureestern erhältliche (cyclo)aliphatische Diisocyanate sind nicht beschränkt, wobei durch thermische Spaltung von (cyclo)aliphatischen Dicarbaminsäureestern erhältliche Diisocyanate aus der Gruppe 1,6-Hexamethylen-diisocyanat, 2-Butyl-2-ethyl-pentamethylen-diisocyanat-1,5 und 1-Isocyanato-3-isocyanatomethyl-3,5,5-trimethylcyclohexan insbesondere bevorzugt verwendet werden. Ganz besonders bevorzugt ist 1,6-Hexamethylen-diisocyanat.

In einer bevorzugt Ausführungsform der Erfindung werden Isocyanate eingesetzt, die einen Gesamtchlorgehalt von 100 Gew.ppm oder weniger aufweisen, bevorzugt 80 Gew.-ppm oder weniger.

Nach diesen Verfahrensvarianten hergestellte Isocyanuratgruppen aufweisende Polyisocyanate eignen sich vorzüglich zur Herstellung von Polyurethan-Beschichtungen, z.B. von Textil- und Lederbeschichtungen, für -Dispersionen und -Klebstoffe und finden insbesondere Verwendung als Polyisocyanatkomponente in Ein- und Zweikomponenten-Polyurethansystemen für hochwertige, wetterbeständige Polyurethan-Lacke und high-solid-Lacke.

In dieser Schrift verwendete ppm- und Prozentangaben beziehen sich, falls nicht anders angegeben, auf Gewichtsprozente und -ppm.

Die folgenden Beispiele sollen die Erfindung erläutern, aber nicht auf diese Beispiele einschränken.

### Beispiele

### Katalysator 1a

Tetrabutylammonium bis(oxalato)borat
Zu einer Lösung von Tetrabutylammoniumbromid (15,00 g, 47 mmol, 1 eq.) in Wasser (30 mL) wird unter Rühren eine Lösung aus LiBOB (9,02 g, 47 mmol, 1 eq.) in 50 mL Wasser gegeben, so dass ein flockiger Niederschlag entsteht (Kontrolle durch pH-Meter). Die Reaktionsmischung wird anschließend mit EtOAc (2 x 100 mL) extrahiert, die vereinigten organischen Phasen werden mit Wasser gewaschen, über Na2SO4 getrocknet, abfiltriert und am Rotationsverdampfer eingeengt um einen farblosen Feststoff (16,30 g, 38 mmol, 82% Ausbeute) zu erhalten.

Wassergehalt (Karl-Fischer-Bestimmung): 0,23%
Elementaranalyse: Lithiumgehalt < 10 ppm und Bromgehalt 340 ppm

### Katalysator 1b

### Tetrabutylammonium Difluoroborat(oxalato)borate

Zu einer Lösung von Tetrabutylammoniumbromid (18,00 g, 56 mmol, 1 eq.) in Wasser (50 mL) wird unter Rühren eine Lösung aus LiDFOB (8,03 g, 56 mmol, 1 eq.) in 70 mL Wasser gegeben, so dass ein flockiger Niederschlag entsteht (Kontrolle durch pH-Meter). Die Reaktionsmischung wird anschließend mit EtOAc (2 x 150 mL) extrahiert, die vereinigten organischen Phasen werden mit Wasser gewaschen, über Na2SO4 getrocknet, abfiltriert und am Rotationsverdampfer eingeengt um einen farblosen Feststoff (16,30 g, 43 mmol, 77% Ausbeute) zu erhalten.

Wassergehalt (Karl-Fischer-Bestimmung): 0,15%
Elementaranalyse: Lithiumgehalt 650 ppm und Bromgehalt 140 ppm

### Katalysator 1c

Tetrabutylammonium Tetrafluoroborat von Aldrich

### Katalysator 1d

Tetrabutylammonium Tetraphenylborat von Aldrich

### Katalysator 2a

Tetrabutylammonium Tetra-n-butylborat von Aldrich

Vergleichs-Beispiel VB1: Katalysator 1a

400.0 g frisch destilliertes Hexamethylendiisocyanat wurden entgast, bei 80°C unter Stickstoffatmosphäre vorgelegt und unter Rühren mit 10000ppm von dem Katalysator 1a (5%ig in N-Methylpyrolidon) versetzt. Nach 6,5 Stunden ist keine Änderung in dem NCO Gehalt von der Lösung zu messen.

### Vergleichs-Beispiel VB2: Katalysator 1b

400.0 g frisch destilliertes Hexamethylendiisocyanat wurden entgast, bei 80°C unter Stickstoffatmosphäre vorgelegt und unter Rühren mit 10000ppm von dem Katalysator 1b (50%ig in N-Methylpyrolidon) versetzt. Nach 4 Stunden ist keine Änderung in dem NCO Gehalt von der Lösung zu messen. Ein GPC Messung würde durchgeführt und bestätigte, dass keine Oligomerisierung stattfand.

### Vergleichs-Beispiel VB3: Katalysator 1c

400.0 g frisch destilliertes Hexamethylendiisocyanat wurden entgast, bei 80°C unter Stickstoffatmosphäre vorgelegt und unter Rühren mit 10000ppm von dem Katalysator 1c (55%ig in N-Methylpyrolidon) versetzt. Nach 6 Stunden ist keine Änderung in dem NCO Gehalt von der Lösung zu messen. Ein GPC Messung würde durchgeführt und bestätigte, dass keine Oligomerisierung stattfand.

### Vergleichs-Beispiel VB4: Katalysator 1d

400.0 g frisch destilliertes Hexamethylendiisocyanat wurden entgast, bei 80°C unter Stickstoffatmosphäre vorgelegt und unter Rühren mit 10000ppm von dem Katalysator 1d (55%ig in N-Methylpyrolidon) versetzt. Nach 2 Stunden ist keine Änderung in dem NCO Gehalt von der Lösung zu messen.

### Erfindungsgemäßes Beispiel EB1: Katalysator 2a

400.0 g frisch destilliertes Hexamethylendiisocyanat wurden entgast, bei 80°C unter Stickstoffatmosphäre vorgelegt und unter Rühren mit 10000ppm von dem Katalysator 2a (50%ig in N-Methylpyrolidon) versetzt. Nach 95 Minuten fiel der NCO-Wert auf 39,8% und die Reaktion wurde dann mit stöchiometrischen Mengen Phosphorsäure-bis-(2-ethylhexylester) gestoppt. Es wurde bei 165 °C / 7 mbar destilliert (Dünnschichtverdampfer) und ein erfindungsgemäßes Produkt mit einem NCO-Gehalt von 21,2 % und eine Viskosität von 3700 mPa*s erhalten. Laut 13C-NMR enthält das Produkt >99 mol% Isocyanurat (Carbodiimide Gruppen sind nicht vorhanden).

## Patentansprüche

1. Verfahren zur Herstellung von Isocyanuratgruppen-enthaltenden Polyisocyanaten durch zumindest teilweise Trimerisierung von (cyclo)aliphatischen Diisocyanaten, **dadurch gekennzeichnet, dass** man die Umsetzung in Gegenwart mindestens eines Trimerisierungskatalysators durchführt, welcher mindestens ein Salz bestehend aus einem tetrasubstituierten Ammonium- oder Phosphoniumkation und einem Tetraalkylboratanion umfasst.

2. Verfahren zur Herstellung von Isocyanuratgruppen-enthaltenden Polyisocyanaten durch zumindest teilweise Trimerisierung von (cyclo)aliphatischen Diisocyanaten, **dadurch gekennzeichnet, dass** man als Trimerisierungskatalysator mindestens eine Verbindung der Formel (I) einsetzt, 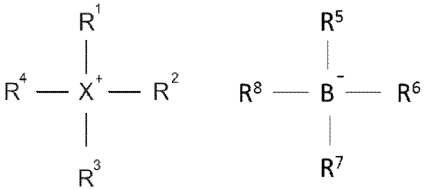 worin
X Stickstoff oder Phosphor ist,
R¹, R², R³ und R⁴ unabhängig voneinander jeweils gleich oder verschieden sein können und für eine geradkettige oder verzweigte, gegebenenfalls substituierte C₁- bis C₂₀-Alkylgruppe, eine gegebenenfalls substituierte C₅- bis C₁₂-Cycloalkylgruppe, eine gegebenenfalls substituierte C₇- bis C₁₀-Aralkylgruppe, oder eine gegebenenfalls substituierte C₆-C₁₂-Arylgruppe stehen
oder
zwei oder mehr der Reste R¹ bis R⁴ gemeinsam miteinander eine 4-, 5- oder 6-gliedrige Alkylenkette bilden oder zusammen mit einem Stickstoffatom oder einem Phosphoratom einen 5-oder 6-gliedrigen Ring bilden, der noch ein zusätzliches Stickstoff- oder Sauerstoffatom als Brückenglied enthalten kann oder gemeinsam ein mehrgliedriges, vorzugsweise sechsgliedriges Mehrringsystem, vorzugsweise Zweiringsystem bilden, das noch ein oder mehrere zusätzliche Stickstoffatome, Sauerstoffatome oder Stickstoff- und Sauerstoffatome als Brückenglieder enthalten kann und
R⁵, R⁶, R⁷ und R⁸ unabhängig voneinander jeweils gleich oder verschieden sein können und für eine geradkettige oder verzweigte, gegebenenfalls substituierte C₁- bis C₂₀-Alkylgruppe oder eine gegebenenfalls substituierte C₅- bis C₁₂-Cycloalkylgruppe
stehen können.

3. Verfahren nach Anspruch 2, **dadurch gekennzeichnet, dass** die Reste R¹ bis R⁴ unabhängig voneinander ausgewählt sind aus der Gruppe bestehend aus Methyl, Ethyl, n-Propyl, Isopropyl, n-Butyl, tert.-Butyl, Phenyl und Benzyl.

4. Verfahren nach Anspruch 2 oder 3, **dadurch gekennzeichnet, dass** die Reste R⁵ bis R⁸ unabhängig voneinander ausgewählt sind aus der Gruppe bestehend aus Methyl, Ethyl, n-Propyl, n-Butyl, tert.-Butyl, Pentyl, Hexyl, Heptyl, Octyl, 2-Etylhexyl, Cyclopentyl, Cyclohexyl, und 2,4,4-Trimethylpentyl.

5. Verfahren nach Anspruch 1 oder 2, **dadurch gekennzeichnet, dass** das Ammonium- oder Phosphoniumkation ausgewählt ist aus der Gruppe bestehend aus Tetraoctylammonium, Tetramethylammonium, Tetraethylammonium, Tetra-n-butylammonium, Trimethylbenzylammonium, Triethylbenzylammonium, Tri-n-butylbenzylammonium, Trimethylethylammonium, Tri-n-butylethylammonium, Triethylmethylammonium, Tri-n-butylmethylammonium, Di-iso-Propyl-diethylammonium, Di-iso-Propyl-ethyl-methylammonium, Di-iso-Propyl-ethyl-benzylammonium, N,N-Dimethylpiperidinium, N,N-Dimethylmorpholinium, N,N-Dimethylpiperazinium N-Methyl-diazabicyclo[2,2,2]octan, Tetraoctylphosphonium, Tetramethylphosphonium, Tetraethylphosphonium, Tetra-n-butylphosphonium, Trimethylbenzylphosphonium, Triethylbenzylphosphonium, Tri-n-butylbenzylphosphonium, Trimethylethylphosphonium, Tri-n-butylethylphosphonium, Tributyl(octyl)phosphonium, Tributyl(tetradecyl)phosphonium, Triethylmethylphosphonium, Tri-n-butylmethylphosphonium, Trihexyl(tetradecyl)phosphonium, Di-iso-Propyldiethylphosphonium, Di-iso-Propyl-ethyl-methylphosphonium,Di-iso-Propyl-ethyl-benzylphosphonium oder Triisobutyl(methyl)phosphonium.

6. Verfahren nach Anspruch 1 oder 2, **dadurch gekennzeichnet, dass** das Tetraalkylboratanion ausgewählt ist aus der Gruppe bestehend aus Tetramethylborat, Tetraethylborat, Tetraisopropylborat, Tetraisobutylborat und Tetra-n-butylborat.

7. Verfahren nach einem der vorstehenden Ansprüche, **dadurch gekennzeichnet, dass** man nach Erreichen des angestrebten Trimerisierungsgrads den Trimerisierungskatalysator desaktiviert.

8. Verfahren nach Anspruch 7, **dadurch gekennzeichnet, dass** man den Trimerisierungskatalysator mit Dibutylphosphat oder Di-(2-ethylhexyl) phosphat desaktiviert.

9. Verfahren nach einem der vorstehenden Ansprüche, **dadurch gekennzeichnet, dass** man als Diisocyanate solche einsetzt, die einen Gesamtchlorgehalt von weniger als 100 Gew.-ppm aufweisen.

10. Verfahren nach einem der vorstehenden Ansprüche, **dadurch gekennzeichnet, dass** man als Diisocyanat 1,6-Hexamethylen-diisocyanat einsetzt.

11. Verwendung von mindestens einem Salz bestehend aus einem tetrasubstituirten Ammonium- oder Phosphoniumkation und einem Tetraalkylboratanion als Trimerisierungskatalysator für Isocyanate.

12. Verwendung der gemäß einem der Ansprüche 1 bis 10 erhältlichen Polyisocyanate zur Herstellung von Polyurethan-Beschichtungen, für-Dispersionen und -Klebstoffe und als Polyisocyanatkomponente in Ein- und Zweikomponenten-Polyurethansystemen für hochwertige, wetterbeständige Polyurethan-Lacke und high-solid-Lacke.
